# EUROPEAN PATENT APPLICATION

(11) **EP 2 224 319 A2**
(43) Date of publication of application: **01.09.2010**
(21) Application number: 10154067.2
(22) Date of filing: 19.02.2010
(51) Int. Cl.: G06F 3/042

(54) **Image input device, image input-output device and electronic unit**

(30) Priority: 27.02.2009 JP 2009046019
(71) Applicant: Sony Corporation, Tokyo 108-0075 (JP)
(72) Inventor: Fukunaga, Yoko, Tokyo 108-0075 (JP); Harada, Tsutomu, Tokyo 108-0075 (JP); Nakajima, Yoshiharu, Tokyo 108-0075 (JP); Tatsuno, Hirokazu, Tokyo 108-0075 (JP); Senda, Michiru, Tokyo 108-0075 (JP)
(74) Representative: Beder, Jens

(57) **Abstract**

An image input device capable of acquiring object information irrespective of usage conditions, is provided. The image input device includes a light source, a light source driving section, a first photo-detection element, a photo-detection-element driving section, and an image processing section. The light source driving section drives the light source so that ON period is shorter than OFF period. The photo-detection-element driving section drives the first photo-detection element so that read operations are performed after respective light reception periods which are same in length both in the ON period and in the OFF period. The image processing section generates a first difference image based on an ON image and an OFF image, and acquires the object information based on the first difference image. The ON/OFF images are acquired based on respective output signals from the first photo-detection element in the ON/OFF periods.

## Description

### BACKGROUND OF THE INVENTION

### 1. Field of the Invention

The present invention relates to an image input device, image input-output (hereinafter, referred to as I/O) device and electronic unit allowing position; shape or size of a proximity object such as a finger and a stylus to be optically detected by capturing an image thereof.

### 2. Description of the Related Art

Recently, electronic units such as a mobile phone, personal digital assistant (PDA), digital still camera, personal computer (PC) monitor and television have a trend of having a function of touch panel using a photosensor. Touch panel is provided with a photosensor and a TFT (thin film transistor) for image display driving, and capable of detecting a position of an object such as a finger and a stylus through photodetection by using the photosensor.

In related art, such positional detection has been realized by using a shodow of an object produced by external light or by detecting a reflection light of a display light emitted from a back light and reflected from the surface of an object. However, shadow is not available in darkness. Meanwhile, the method of using the reflection light is not available in black display, and further, signals from photosensor may be buried in display noise since display pattern affects the level of the reflected light.

To solve the issues, Japanese Patent Application Publication No. 2006-301864 (JP2006-301864A) discloses a touch panel in which a light source emitting an infrared light as a detection light is disposed at the back light portion of an LCD (liquid crystal display). In this touch panel, a photosensor detects an infrared light reflected from the surface of an object by utilizing the phenomenon that a polarizing plate loses its polarization characteristic in the infrared region and that component members of the display have a high transmittance for infrared light. Accordingly, positional detection becomes available even in the darkness or black display, and no signal is affected by display patterns. In addition, Japanese Patent Application Publication No. 2006-276223 (JP2006-276223A) discloses a method in which a light source is driven by time division driving and influence of external light and noise is removed by taking a difference of two images each obtained at an ON-light period and an OFF-light period of the lght source, to obtain higher S/N ratio (signal to noise ratio).

### SUMMARY OF THE INVENTION

However, the above disclosures have issues in that, when the external light level (external light illumination) is strong, photosensor may become saturated or the light turns around to the rear side of the object to be detected, and such saturation of photosensor and leakage of external light may deteriorate accuracy in detecting the reflection light.

Moreover, in the disclosure of JP2006-276223A, since there is a time lag between the light-ON period and the light-OFF period caused by the time division control, when an object to be detected is moving, a false signal may be generated because of the time lag, and accuracy of detection may be thereby deteriorated. In particular, the effect given by the false signal becomes outstanding especially when the moving velocity of the object is large, or when the detected surface of the object is small in size. Further, such false signal may also be generated when the external light level has been changed because of the time lag.

It is desirable to provide an image input device, image I/O device and electronic unit allowing information on the position, shape or size of a proximity object to be acquired with accuracy irrespective of usage conditions.

An image input device includes a light source, a light source driving section controlling alternative on-off driving of the light source in such a manner that ON period is shorter than OFF period, a first photo-detection element having a photosensitive wavelength range covering a wavelength range of light emitted from the light source, a photo-detection-element driving section driving the first photo-detection element so that read operations are performed after respective photoreception periods which are same in length both in the ON period and in the OFF period, and an image processing section acquiring object information on position, shape and size of an object based on output signals from the first photo-detection element. The image processing section generates a first difference image as a difference between an ON image and an OFF image, the ON image and the OFF image being acquired based on respective output signals from the first photo-detection element in the ON period and the OFF period, and then the image processing section acquires the object information through data processing based on the first difference image.

An image input-output device includes a display panel, a display-panel driving section controlling on-off driving of the display panel in such a manner that ON period in which light is emitted from the display panel is shorter than OFF period in which light is not emitted from the display panel, a first photo-detection element having a photosensitive wavelength range covering a wavelength range of light emitted from the display panel, a photo-detection-element driving section driving the first photo-detection element so that read operations are performed after respective photoreception periods which are same in length both in the ON period and in the OFF period, and an image processing section acquiring object information on position, shape and size of an object based on output signals from the first photo-detection element. The image processing section generates a first difference image as a difference between an ON image and an OFF image, the ON image and the OFF image being acquired based on respective output signals from the first photo-detection element in the ON period and the OFF period, and then the image processing section acquires the object information through data processing based on the first difference image.

An electronic unit according to an embodiment of the present invention includes the image input device of the present invention. However, according to an embodiment of the present invention, the external light includes not only lights obtained under external environments such as sunlight and interior illumination, but also a stray light constituted from the image display light reflected from components in the device.

In the image input device, image I/O device and electronic unit according to the embodiment of the present invention, light emitted from the light source or display panel is reflected from the surface of an object to be detected in the ON period, and both of the reflected light and external light are detected in the first photo-detection element. Meanwhile, in the OFF period, only external light is detected in the first photo-detection element. The image processing section generates a difference image from an ON-image in the ON period and an OFF-image in the OFF period based on these outputs to detect the position or the like of an object based on the difference image, and detects the position of the object and so on based on the difference image. Here, since the ON period is set shorter than the OFF period and each reading operation in the ON/OFF periods is performed after a mutually-same light receiving time has passed, each light receiving time in the ON period and the OFF period may be reduced compared with a case where the ON/OFF periods driven by the time division driving are equal to each other.

According to the image input device, image I/O device and electronic unit, the light source or display panel alternates between the ON period and the OFF period so that the ON period is set shorter than the OFF period, and the reading by the first photo-detection element is performed in each period after a mutually-same light receiving time has passed. The image processing section generates a difference image from an ON image obtained in the ON period and an OFF image obtained in an OFF period each based on the outputs from the first photo-detection element, and carries out data processing based on the difference image. In this manner, the first photo-detection element is less likely to be saturated even when external light level is strong, and generation of a false signal is suppressed even when an object is moving or the external light level is not constant. Accordingly, information on the position, shape or size of a proximity object is available with more accuracy irrespective of usage conditions.

### BRIEF DESCRITION OF THE DRAWINGS

FIG. 1 is a block diagram showing an entire configuration of an image I/O device according to an embodiment of the present invention.
FIG. 2 is a sectional view showing a schematic configuration of a display panel illustrated in FIG. 1.
FIGs. 3A and 3B are a pattern diagrams indicating an arrangement configuration of a main sensor and a sub sensor illustrated in FIG. 2.
FIGs. 4A to 4C are a waveform charts showing a photosensitive wavelength range of the main sensor and sub sensor illustrated in FIG. 2.
FIGs. 5A to 5E are a drive timing charts and so on of the IR light source illustrated in FIG. 2.
FIG. 6 is a equivalent circuit schematic of the main sensor and the sub sensor.
FIGs. 7A and 7B show a first example of timing charts of sensor scan and lighting of the light source.
FIGs. 8A and 8B show a second example of timing charts of sensor scan and lighting of the light source.
FIGs. 9A and 9B show a third example of timing charts of sensor scan and lighting of the light source.
FIG. 10 is a flow chart of a light detecting process and an image process.
FIGs. 11A and 11B are views showing an output voltage of the main sensor.
FIG. 12 is a view showing output voltages of the main sensor in the ON/OFF periods when an object is moving, and a difference voltage therebetween.
FIG. 13 is a view showing images obtained from the main sensor in the ON/OFF periods when an object is moving, and a difference image thereof.
FIG. 14 is a view showing output voltages of the sub sensor in the ON/OFF periods when an object is moving, and a difference voltage therebetween.
FIG. 15 is a view showing images obtained from the sub sensor in the ON/OFF periods when an object is moving, and a difference image thereof.
FIG. 16 is a view to explain a composing process executed in an image processing section.
FIG. 17 is a flow chart showing the way of setting up the length of the ON period (ON time) in the setup process.
FIG. 18 is a flow chart showing the way of setting up the ON-state current (light intensity in the ON period) in the ON period in setup processing.
FIGs. 19A to 19E are timing charts etc., of the time division driving of the IR light source according to a comparative example.
FIGs. 20A and 20B are views to explain the difference in the accuracy of detection due to the difference in the level of external light.
FIG. 21 is a cross section view showing a schematic configuration of the display panel according to a first modification 1.
FIG. 22 is a perspective view illustrating an external appearance of a first application example.
FIG. 23A is a perspective view illustrating an external appearance of a second application example as viewed from the front side, and FIG. 23B is a perspective view thereof as viewed from the back side.
FIG. 24 is a perspective view illustrating an external appearance of a third application example.
FIG. 25 is a perspective view illustrating an external appearance of a fourth application example.
FIG. 26A is a front elevation view of a fifth application example in an opened state, FIG. 26B is a side elevation view of FIG. 26A, FIG. 26C is a front elevation view thereof in a closed state, FIG. 26D is a left side view of FIG. 26C, FIG. 26E is a right side view thereof, FIG. 26F is a plan view thereof, and FIG. 26G is a bottom view thereof.

### DESCRIPTION OF THE PREFERRED EMBODIMENTS

Embodiments of the invention will be described in detail hereinbelow with reference to the drawings. Explanation is given in the following procedure.
(1) Embodiment: example of an image I/O device in which an liquid crystal display is employed.
(2) First modification: example of an image I/O device in which an organic electroluminescence (hereinafter, referred to as EL) display is employed.
(3) Application examples 1 to 5: examples of an electronic unit in which the above-mentioned image I/O device is mounted.

### <EMBODIMENT>

### [Entire Configuration of Image I/O device 1]

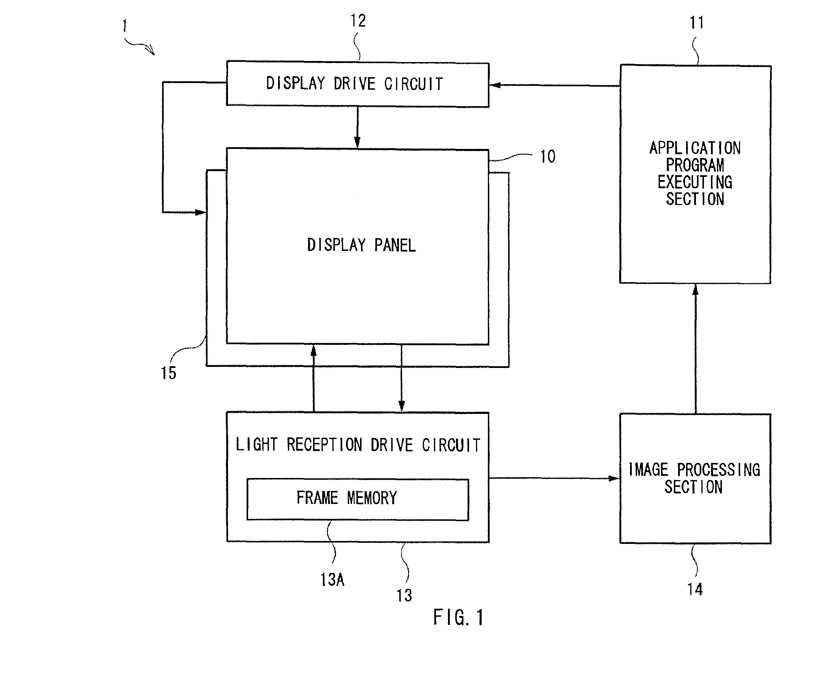

FIG. 1 illustrates an entire configuration of an image I/O device (image I/O device 1) according to an embodiment of the present invention. The image I/O device 1 is an image display device with an input function that has not only a display function of displaying images such as a predetermined graphic form and a character on a display panel 10 but an input function of obtaining information such as a position or the like of an object which comes in contact with or close to a screen (input function) by capturing an image of the object. The image I/O device 1 includes a display panel 10, a back light 15, a display drive circuit 12, a light reception drive circuit 13, an image processing section 14, and an application program executing section 11.

The display panel 10 is configured to employ a liquid crystal panel (LCD: Liquid Crystal Display), in which a plurality of pixels are fully arranged in matrix. The back light 15 functions as a light source for displaying an image or detecting an object. Configuration of these display panel 10 and the back light 15 will be described in detail later.

The display drive circuit 12 is a circuit executing a line-sequential image display drive of the display panel 10 and the lighting drive of the back light 15 so that an image based on display data may be displayed in the display panel 10. According to the present embodiment, the display drive circuit 12 controls ON and OFF of the lighting of an IR light source 151B that constitutes the back light 15 (to be described later) according to a time division driving, so that the ON period and the OFF period may be optimized in accordance with an intensity level of external light. Here, the display drive circuit 12 corresponds to a light source driving section according to the present invention.

The light reception drive circuit 13 is a circuit executing a line-sequential light receiving drive of a photosensor (a main sensor 111A and a sub sensor 111B, to be described later), which is disposed in the display panel 10. Namely, the light reception drive circuit 13 drives the main sensor 111A and the sub sensor 111B so that photodetection may be suitably performed in accordance with the ON period and the OFF period, which are controlled by the time division driving of the above-mentioned IR light source 151B. Outputs (photo detection signal) from the main sensor 111A and the sub sensor 111B are recorded on the frame memory 13A as an image. Here, the light reception drive circuit 13 corresponds to a photo-detection-element driving section according to the present invention.

The image processing section 14 executes a predetermined image process and data processing based on the image supplied from the light reception drive circuit 13 to acquire the information on the position, shape or size of the data-processed object.

The application program executing section 11 executes a process in accordance with a given application software based on the information about the object, which has been acquired by the image processing section 14. One of such process is, for example, to take positional coordinates of the object into display data to be displayed on the display panel 10. The display data generated by the application program executing section 11 is supplied to the display drive circuit 12.

### (Configuration of the Display Panel 10)

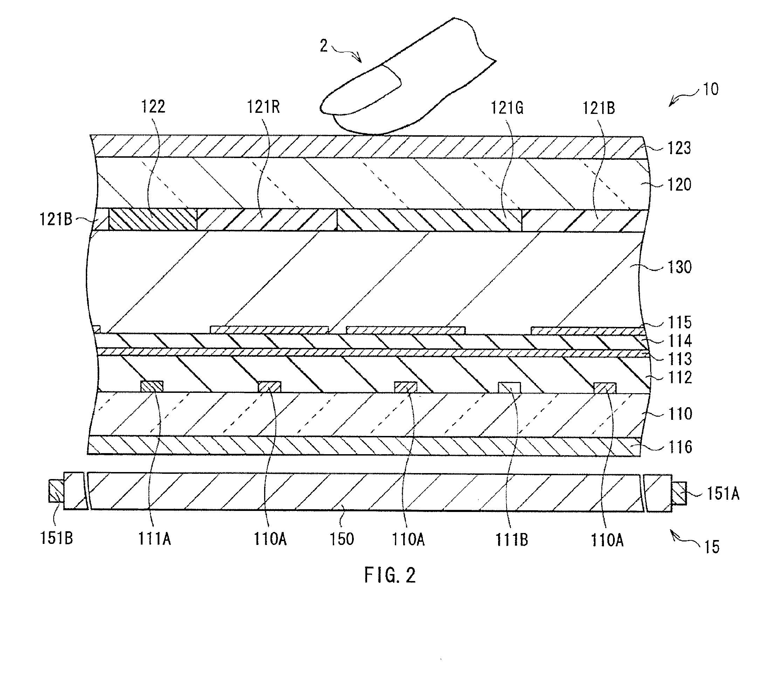

Subsequently, configuration of the display panel 10 will be explained in detail. FIG. 2 shows a sectional configuration of the display panel 10 and the back light 15. The display panel 10 is configured such that the display pixels (image display devices) of the three primary colors R, G, and B are arranged in matrix, for example. In the display panel 10, a liquid crystal layer 130 is enclosed between a pair of substrates 110 and 120, and the back light 15 is disposed behind the substrate 110. A polarizing plate 116 is attached to the substrate 110 on the light incidence side thereof (on the side near the back light 15), and a polarizing plate 123 is attached to the substrate 120 on the light emission side thereof (on the display side). The polarizing plates 116 and 123 are arranged in a crossed Nicols state and each selectively transmits a specific polarization component.

The liquid crystal layer 130 modulates a light passing therethrough according to the state of an electrical field, and is constituted from a liquid crystal of a lateral electric field mode such as FFS (fringe field switching) mode and IPS (in-plain switching) mode. However, the liquid crystal element is not limited to those lateral electric field modes such as FFS mode, and various driving modes of liquid crystals can be used.

The substrate 110 is a substrate on the driving side, and is made of a crystal etc., for example. A plurality of TFT110A for driving a plurality of pixels, two kinds of photosensors (the main sensor 111A and the sub sensor 111B), and a TFT (not illustrated) for the light receiver circuit of the main sensor 111A and the sub sensor 111B are disposed cyclically on the substrate 110. The main sensor 111A, the sub sensor 111B, the TFT for the light receiver circuit of the main sensor 111A and the sub sensors 111B, and the TFT110A for driving pixels may be formed by the same silicon thin film formation process on the substrate 110, for example. The TFT110A drives each display pixel according to an active matrix method, and is electrically connected to a pixel electrode 115 to be described later.

The main sensor 111A and the sub sensor 111B are photo-detection elements which may detect electrical current and voltage when the PN junction portion of the semiconductor is illuminated. The receiver circuit of the main sensor 111A and the sub sensor 111B, which will be described in detail later, includes three transistors for each sensor, for example. Those main sensor 111A and the sub sensor 111B are constituted from a PIN photodiode and a PDN (photo sensitive doped layer: P-doped-N), etc., made of a silicon semiconductor, for example. Here, the main sensor 111A corresponds to a first photo-detection element and the sub sensor 111B corresponds to a second photo-detection element according to an embodiment of the present invention.

A flattening film 112 is formed on the substrate 110 in order to flatten the unevenness of the TFT110A, the main sensor 111A and the sub sensor 111B. A common electrode 113 and a plurality of pixel electrodes 115 are formed on the flattening film 112 to face each other with the insulating layer 114 in between. Among them, the common electrode 113 is disposed as an electrode common to all display pixels, and the pixel electrodes 115 are disposed separately for each display pixel. According to the embodiment, the pixel electrodes 115 are patterned into a comb-like configuration, for example. With such configuration, the image display driving of lateral electric field mode such as FFS mode and IPS mode is available together with the liquid crystal layer 130.

The substrate 120 is a substrate on the side of a color filter, and is made of a glass or the like, for example. A red filter 121R, a green filter 121G, and a blue filter 121B are provided as color filters on one side of the substrate 120 to face the respective display pixels. An IR transmission black 122 is formed in a layer same as these red filter 121R, green filter 121G and blue filter 121B. The IR transmission black 122 is a filter which shuts down visible light and transmits infrared light.

The IR transmission black 122 is constituted from a pigment dispersed resist made by dispersing a pigment that selectively transmits and shuts down lights of a specific wavelength range onto a resist material having photosensitivity, for example. Examples of the resist material include such as an acrylic system, a polyimide system and a novolak system. Examples of the pigment include those which have thermal resistance and light stability in the manufacturing process and are used for a color filter or the like, and which transmit near infrared light. More specifically, the pigment includes at least one of azo pigment, phthalocyanine pigment and dioxazine pigment and so on. The azo pigment shows red, yellow and orange. The phthalocyanine pigment shows blue and green, and the dioxazine pigment shows violent. Alternatively, black organic pigments may be used.

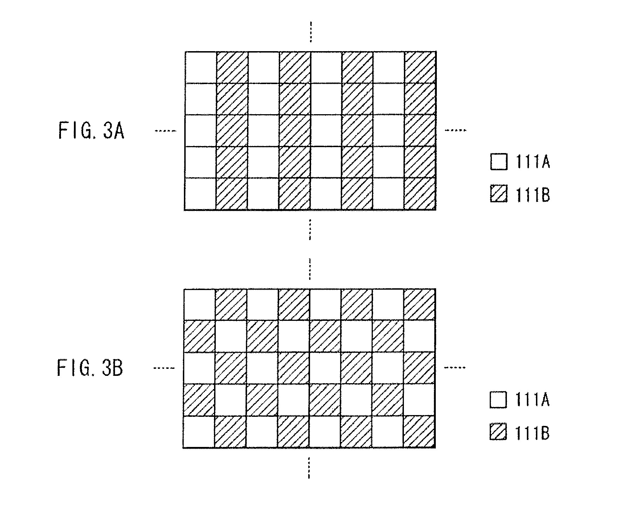

In such configuration, the main sensor 111A is disposed underneath the IR transmission black 122. The sub sensor 111B is disposed in an area between a G pixel and a B pixel, for example, and according to the embodiment, the green filter 121G extends above the sub sensor 111B. As shown in FIGs. 3A and 3B for example, the main sensors 111A and the sub sensors 111B are arranged alternately at an equal ratio of one to one in the display area 21.

### (Configuration of Back Light 15)

The back light 15 emits a white light as a light for display while emits near infrared light (wavelength: 780 to 1100 nm) as a light for detection. An example of such back light 15 is a type where a white light source 151A emitting a white light and an IR light source 151B emitting a near infrared light are attached at both ends of a plate-like light guide plate 150. Examples of the white light source 151A and the IR light source 151B may include a light emitting diode (LED). With such configuration, the white light emitted from the white light source 151A and the near infrared light emitted from the IR light source 151B are propagated through the inside of the light guide plate 150 respectively and taken out from the surface thereof. According to the present embodiment, as mentioned above, the ON period and the OFF period of the IR light source 151B are switched by the display drive circuit 12.

As for the light for detection, it is not necessarily limited to the above-mentioned near infrared light but any lights in the wave range human eyes may not respond to (excluding the range of 380 to 780 nm, for example), i.e., what is called invisible light, may be used. For example, an ultraviolet light with a wavelength shorter than that of visible light, especially a near-ultraviolet light (300 to 380 nm) may be used. However, since the polarizing plates 116 and 123 have a polarization characteristic in the near UV region and the visible region, when the near-ultraviolet light is used, the optical transmittance may decrease, thereby reducing the detection amount of light and being subject to the display image. On the other hand, since the polarization characteristic of the polarizing plate 116 and 123 is lost in the near-infrared region when the near infrared light is used, reduction in the detection amount of light may be suppressed. For this reason, it is desirable to use a near infrared light as the invisible light when the liquid crystal panel that needs a polarizing plate is used as with the embodiment. (Photosensitive Wavelength Range of the Main Sensor 111A and the Sub Sensor 111B)

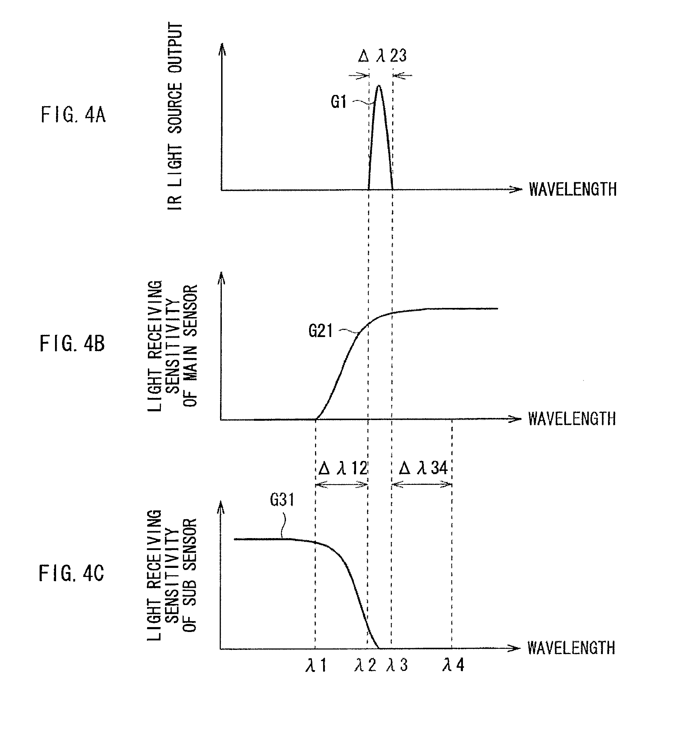

Here, photosensitive wavelength range of each main sensor 111A and sub sensor 111B will be described hereinbelow with reference to FIGs. 4A to 4C. FIG. 4A shows the light emitting wavelength range of the IR light source 151B, and FIG. 4B shows the photosensitive wavelength range of the main sensor 111A, and FIG. 4C shows the photosensitive wavelength range of the sub sensor 111B, respectively.

When the light emitting wavelength range (near infrared band) of the IR light source 151B is defined as Δ λ23 (the wavelength from λ2 to λ3) as illustrated in FIG. 4A, the photosensitive wavelength range of the main sensor 111A is set up in a range longer than the wavelength λ1 as shown by G21 of FIG. 4B. Namely, since the main sensor 111A includes the wavelength range Δ λ23 as shown by the reference numeral G1 of FIG. 4A within its photosensitive wavelength range, that means the main sensor 111A may detect lights reflected from an object.

Meanwhile, the photosensitive wavelength range of the sub sensor 111B is set up in a range shorter than the wavelength λ2 as shown by G31 of FIG. 4C. Namely, the photosensitivity of the sub sensor 111B is inferior to that of the main sensor 111A in the light emitting wavelength range Δλ23 of the IR light source 151B (for example, the photosensitivity in the wavelength range Δλ23 is zero). Accordingly, the sub sensor 111B captures a shadow of the object whether the IR light sources 151B is in the ON period or in the OFF period. The above-mentioned photosensitive wavelength ranges of the main sensors 111A and the sub sensors 111B may be realized by installing on the light receiving plane of photo diode an optical filter etc., which is matched to each photosensitive wavelength range. As for the optical filter, a pigment dispersed resist made by dispersing a pigment that selectively transmits and shuts down lights of specific wavelength ranges onto a resist material having photosensitivity, for example.

Here, the wavelength range Δλ12 (wavelength range from Δλ1 to Δλ2) corresponds to visible region, and both of the main sensor 111A and the sub sensor 111B include the visible region as the photosensitive wavelength ranges. It is to be noted that the relationship between the light emitting wavelength range of the light for detection and the photosensitive wavelength ranges of the main sensor 111A and the sub sensor 111B is not limited to the case as mentioned above. However, it is desirable that the photosensitivity of the main sensor 111A in the wavelength range of detected light be higher than that of the sub sensor 111B, and that an external light of a wavelength range to which the main sensor 111A may respond be also receivable by the sub sensor 111B. That is because, though details will be described later, the sub sensor 111B has a function to detect a false signal caused by the external light received in the main sensor 111A.

Here, in the present embodiment, the external light refers to a light other than the light emitted from the IR light source 151B and reflected from a surface plane of an object. Specifically, it means ambient lights such as sunlight and interior illumination, and may further include lights having turned into a stray light from the white light emitted from the back light 15.

Subsequently, function and effect of the image I/O device 1 will be described hereinbelow.

### [Displaying Operation of the Image I/O Device 1]

In the image I/O device 1, a driving signal for image display is generated in the display drive circuit 12 based on display data supplied from the application program executing section 11. Then the line-sequential image display driving is executed in the display panel 10 based on the driving signal. At this time, the display drive circuit 12 also performs a lighting drive of the white light source 151A in the back light 15. In the display panel 10, when a driving voltage larger than a predetermined threshold voltage is applied between the common electrode 113 and the pixel electrode 115 based on the above-mentioned driving signal, orientation of the liquid crystal in the liquid crystal layer 130 is modulated. Thereby, the white light emitted from the back light 15 into the liquid crystal layer 130 through the polarizing plate 116 is modulated for each display pixel, and thereafter, passes through corresponding color filters 121R, 121G and 121B to be emitted upward through the polarizing plate 123. In this manner, an image is displayed on the display panel 10.

### [Input Operation of Image I/O Device 1]

Meanwhile, when an object (fingertip 2 or the like, for example) comes in contact with or closer to the display panel 10, an image of the object is captured by the main sensor 111A and the sub sensor 111B provided in the display panel 10 according to the line-sequential light receiving drive executed by the light reception drive circuit 13. At this time, the display drive circuit 12 performs the lighting drive of the IR light source 151B provided in the back light 15. Since the IR transmission black 122 is disposed above the main sensor 111A and the green filter 121G is disposed above the sub sensor 111B, it is likely that a near infrared light is selectively entered into the main sensor 111A, and a visible light (green light in this case) is selectively entered into the sub sensor 111B.

The photodetection signals generated from these main sensors 111A and the sub sensor 111B are supplied to the light reception drive circuit 13, and are outputted as a captured image to the image processing section 14. The image processing section 14 acquires data with regard to the position or the like of the object by executing a predetermined image process and data processing based on the captured image.

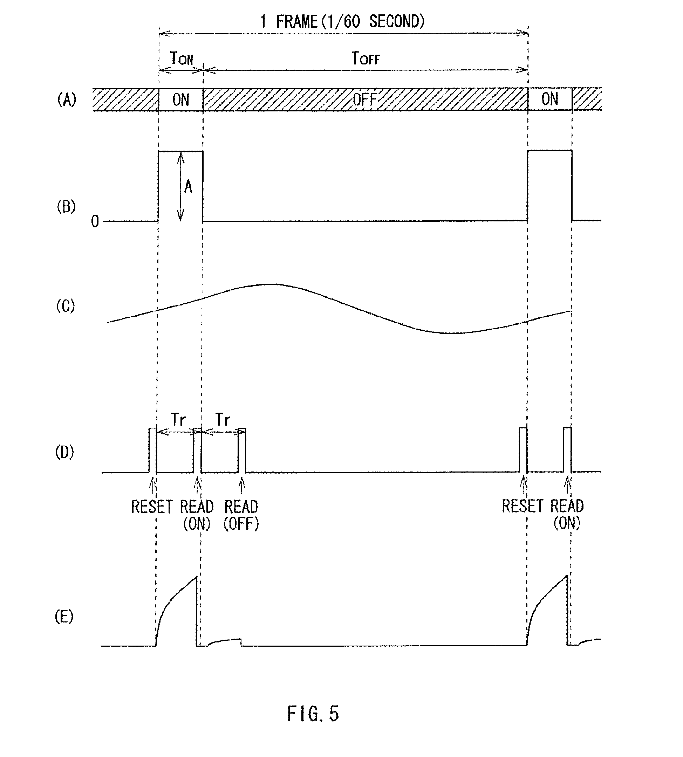

Such input operation as described above (light source driving operation, light detecting operation, image process operation, and setup processing operation) will be described in detail hereinafter. FIG. 5A is a timing chart of the time division driving operation applied to the IR light source 151B (an example of the ON period and the OFF period) per frame period. FIG. 5B shows an output from the IR light source 151B, FIG. 5C shows a variation of external light according to the time division driving applied to the IR light source 151B, FIG. 5D shows reading timing in the main sensor 111A (sub sensor 111B), and FIG. 5E shows an output from the main sensor 111A.

### (1. Time Division Driving Operation of the IR Light Source 151B)

According to the present embodiment, the display drive circuit 12 executes time division driving operation of the IR light source 151B in the back light 15 upon capturing an image of the object as described above so that the ON period and the OFF period of the IR light source 151B may be switched. In this case, the ON period Ton may be set shorter than the OFF period Toff per unit frame period (a sixtieth second here) as exemplarily shown in FIG. 5A.

As shown in FIG. 5B, the output from the IR light source 151B is a short rectangular pulse wave with a peak value A, for example. The signal strength of the near infrared light emitted from the IR light source 151B is equal to an integral value between the peak value A and the ON period Ton. Therefore, though details will be described later, the peak value A of the ON period Ton is controlled to optimize the output of the near infrared light according to the level of external lights. The peak value A corresponds to the intensity of lights emitted from the IR light source 151B and is controllable by means of driving current.

The near infrared light outputted from the IR light source 151B in this manner is, after having passed through the display panel 10, reflected on the surface plane of the object that has come close to the display panel 10, and enters into the display panel 10 again.

### (2. Light Detecting Operation by Main Sensor 111A and Sub Sensor 111B)

While light reflected from the object and having entered into the display panel 10 transmits the IR transmission black 122, it is shut down by the green filter 121G disposed above the sub sensor 111B. Accordingly, the main sensor 111A mainly receives (detects) the light (near infrared light) reflected from the object according to the above-mentioned line-sequential light receiving drive executed by the light reception drive circuit 13.
Simultaneously, external light is detected in the main sensor 111A and the sub sensor 111B.

At this time, the timing of reading by the main sensor 111A and the sub sensor 111B is set up in accordance with the ON period Ton as shown in FIG. 5D. Specifically, operational reset is performed just before the start of the ON period first, and accumulation of detected light has started from the beginning of the ON period. Then, the accumulated light detecting signal is read(on) at the end of the ON period (light receiving time: Tr). Meanwhile, in the OFF period Toff, reading(off) operation is performed after a light receiving period the length of which is equal to that of the ON period Ton (light receiving time Tr) has passed.

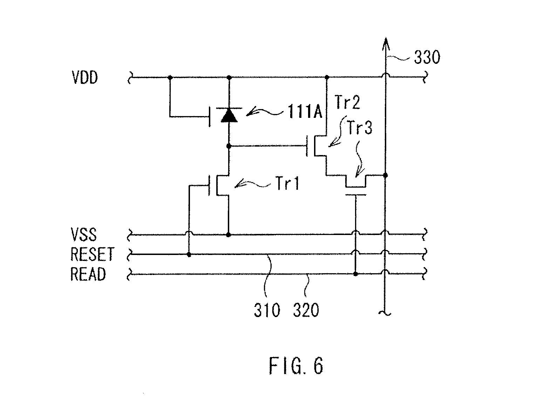

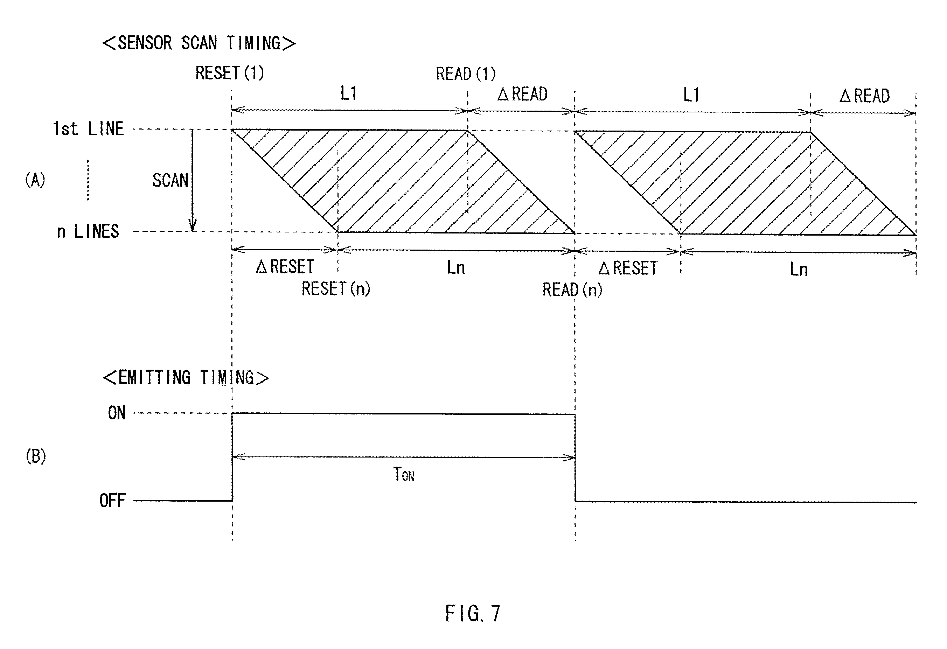

Such reading (and reset) operation by the main sensor 111A and the sub sensor 111B is executed by the control of the light reception drive circuit 13 through line sequential scanning. Specifically, the light detection is performed according to the following scanning timing. Here, FIG. 6 is an equivalent circuit schematic including the main sensor 111A, and FIGs. 7A to 9B represent a scanning timing of the main sensor 111A and a light-emission timing of the IR light source 151B. Here, although the main sensor 111A is mentioned as an example, the same is also applied to the sub sensor 111B.

As shown in FIG. 6, the light receiving circuit which includes the main sensor 111A is configured to include three transistors Tr1 to Tr3 in addition to the main sensor 111A, for example. These transistors Tr1 to Tr3 are each formed of a TFT (thin film transistor) etc., for example. In this light receiving circuit, the cathode of the main sensor 111A is connected to the power source VDD, and the anode thereof is connected to the drain of the transistor Tr1 and the gate of the transistor Tr2, respectively. The source of the transistor Tr1 is connected to ground VSS, and the gate thereof is connected to a reset signal line 310. The source of the transistor Tr2 is connected to the power source VDD, and the drain thereof is connected to the drain of the transistor Tr3. The gate of the transistor Tr3 is connected to a read signal line 320, and the source thereof is connected to a light reception signal output line 330. This light reception signal output line 330 is connected to a constant current source which is not shown.

With such configuration, the transistor Tr1 becomes ON state when the reset signal line 310 becomes "H (high)" state. As a result, received light potential of the main sensor 111A by the side of the anode, which is determined according to the amount of detected light is reset to the ground VSS. Meanwhile, when the read signal line 320 becomes "H" state, the transistors Tr2 and Tr3 having a function as a source follower becomes ON state according to the received light potential of the main sensor 111A by the anode side, and the received light potential is outputted to the light reception signal output line 330 (data is read out). The light detecting operation is line-sequentially applied (from first to n^{th} line) to the main sensor 111A, which is arranged in matrix, so that the above-mentioned reading and reset operation may be performed at a predetermined timing (as shown in the following timing charts 1 to 3 for example) according to the ON period Ton.

### (Timing Chart 1)

Specifically, the main sensor 111A and the IR light source 151B may be driven respectively based on the timing chart as shown in FIGs. 7A and 7B. As shown in FIG. 7A, in the main sensor 111A, a light detection signal is acquired in each exposure time L1 to Ln (light receiving time) for the first to n^{th} lines (shaded area of FIG. 7A). The exposure time L1 for the first line lasts from the first line reset point (Reset (1)) to the first line read point (Read (1)). Similarly, the exposure time Ln for the n^{th} line lasts from the n^{th} line reset point (Reset (n)) to the n^{th} line read point (Read (n)). In addition, such line sequential scanning requires both the reset period Δ Reset for sequentially performing the reset operation from first to n^{th} lines and the reading period Δ Read for sequentially performing the reading operation from the first to n^{th} lines. Hereinafter, these reset period ΔReset and reading period ΔRead are just referred to as scan period.

Meanwhile, as shown in FIG. 7B, the ON period Ton of the IR light source 151B is equal to the above-mentioned scan timing period from Reset (1) to Read (n). That is, the IR light source 151B is set up so that the ON period Ton thereof can cover the scan period of the main sensor 111A.

When such light detecting operation in the ON period Ton is over, the main sensor 111A then starts the scanning operation in the OFF period Toff. Specifically, it is driven in the main sensor 111A so that the Reset (1) for the first line and turn-out (OFF) of the IR light source 151B may be performed simultaneously at the time of the reading Read (n) for the n^{th} line in the ON period Ton.

### (Timing Chart 2)

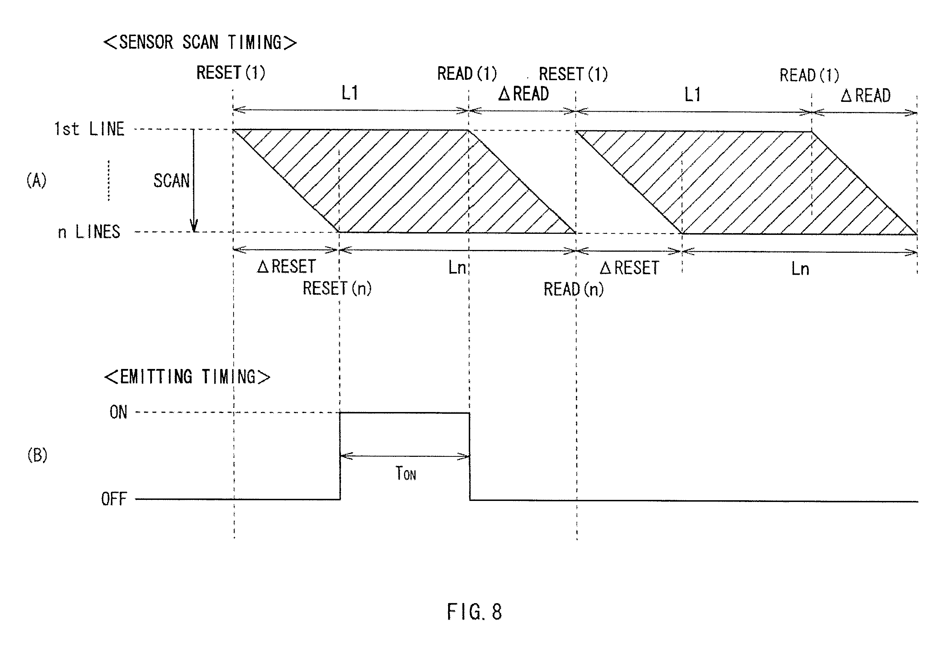

Alternatively, the main sensor 111A and the IR light source 151B may be driven based on a timing chart as shown in FIGs. 8A and 8B. Also in this case, in the main sensor 111A, a light detection signal is acquired in each exposure time L1 to Ln (shaded area of FIG. 8A) and the reset period ΔReset and the reading period ΔRead are needed, as shown in FIG. 8A.

Here in this case, however, as shown in FIG. 8B, the ON period Ton of the IR light source 151B is equal to a period from Reset (n) to Read (1) in the above-mentioned scan timing period. That is, the ON period Ton of the IR light source 151B is set to avoid the scan period of the main sensor 111A. In this setting, all the light emission may fall within the range of the exposure time (light receiving time), thereby cutting the waste of emission output and leading to the reduction of power consumption. The Scan in the OFF period Toff is started at the end of Read (n) in the ON period Ton as with the above-mentioned timing chart 1.

### (Timing chart 3)

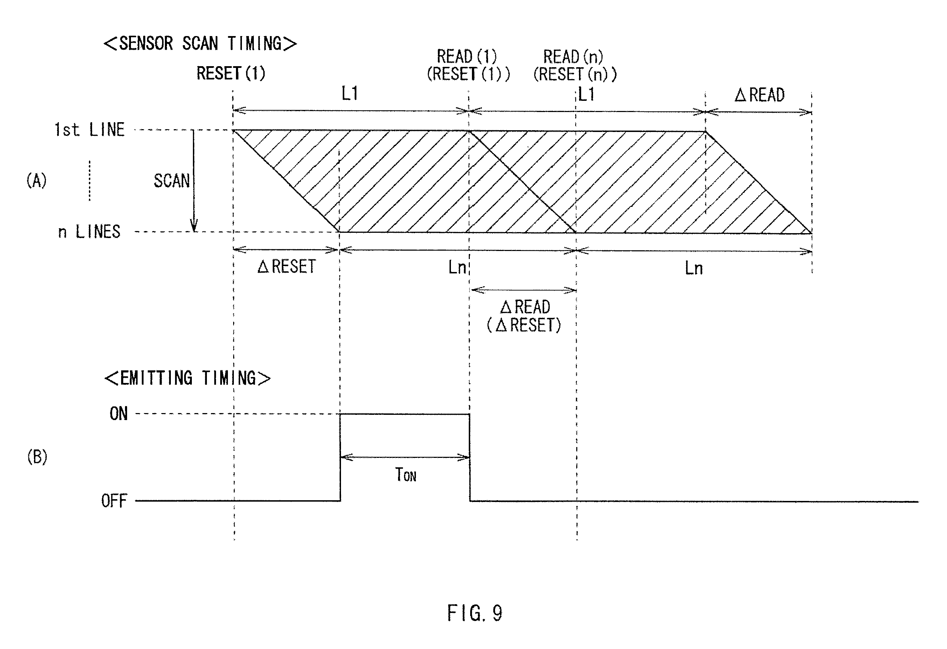

If the IR light source 151B is set so that the ON period Ton thereof may avoid the scan period of the main sensor 111A as mentioned above, the driving timing as shown in FIGs. 9A and 9B is also available. That is, as shown in FIG. 9A, Read (1) in the ON period Ton and Reset (n) in the OFF period Toff may be executed continuously. Since the time lag between the reading in the ON period Ton and in the OFF period Toff may be thereby reduced, generation of a false signal may be suppressed effectively while delay in the output may be improved.

Namely, according to the present embodiment, although the ON period Ton is shorter than the OFF period Toff per unit frame period, the timing of reading in the OFF period Toff is determined based on the length of the ON period Ton. Accordingly, such an output as shown in FIG. 5E is available in the main sensor 111A, for example.

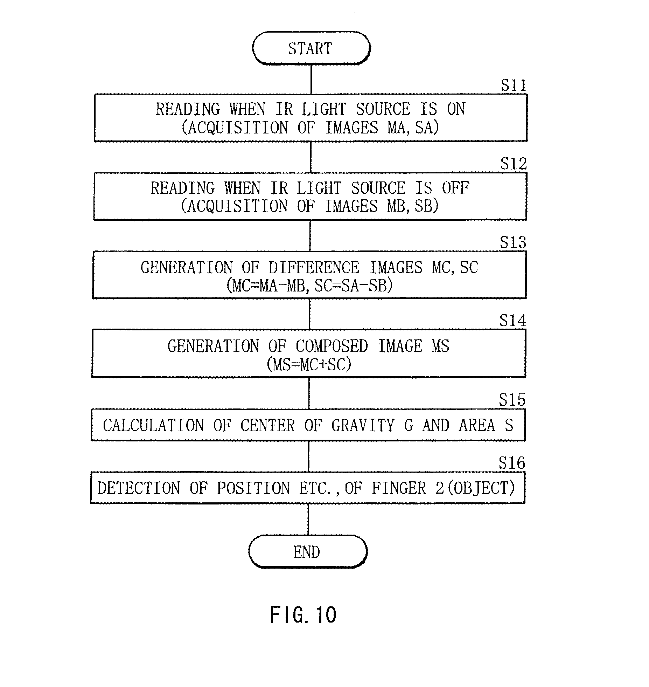

Here, a flow chart of the above-mentioned light detecting operation (steps S11 and S12) and the image process operation (steps S13 to S16) in the image processing section 14 is shown in FIG. 10. For example, a light detection signal Von1 is read out from the main sensor 111A and a light detection signal Von2 is read out from the sub sensor 111B in the ON period Ton at first to obtain an image MA based on the light detection signal Von1 and an image SA based on the light detection signal Von2 respectively (Step S11). Subsequently, in the OFF period Toff, a light detection signal Voff1 and a light detection signal Voff2 are read out from the main sensor 111A and the sub sensor 111B respectively, to obtain an image MB based on the light detection signal Voff1 and an image SB based on the light detection signal Voff2 (Step S12). As a result, the image MA of the ON period and the image MB of the OFF period are acquired sequentially in the main sensor 111A, and the image SA of the ON period and the image SB of the OFF period are sequentially acquired in the sub sensor 111B. The acquired images MA and SA and the images MB and SB are then outputted to the image processing section 14 one by one.

The length of the ON period Ton and light intensity are optimized (setup processing) in accordance with states of the object to be detected and intensity of external light, etc. Details of the setup processing operation will be described later.

### (3. Image Process Operation by the Image Processing Section 14)

### (3-1. Difference Image Generating Process)

First, the image processing section 14 generates a difference image MC of the images MA and MB obtained from the main sensor 111A and generates a difference image SC of the images SA and SB obtained from the sub sensor 111B (Step S13). Here, the image MA includes a signal of a reflected light (hereinafter referred to as reflected light signal) and a signal of external light (hereinafter referred to as external light signal), while the image MB includes only the external light signal. Accordingly, the external light signal as a noise is removed by way of subtraction (MA minus MB) to obtain a difference image MC of the reflected light signal.

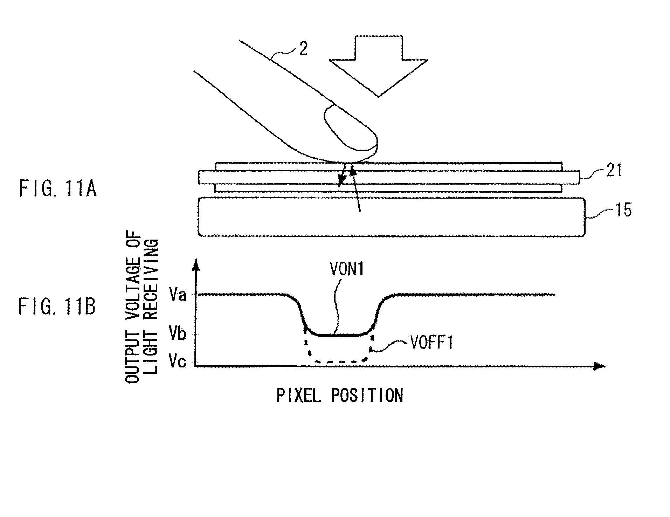

For example, when an object (fingertip 2) is in contact with the screen surface as shown in FIG. 11A, the light detection signal Von1 of the main sensor 111A in the ON period Ton indicates a voltage value Vb for the pixel position touched by the fingertip 2 corresponding to the refectivity on the surface plane of the fingertip 2 as shown in FIG. 11B. Meanwhile, it indicates a voltage value Va in accordance with the external light level. On the other hand, though it is the same in that the light detection signal Voff1 of the main sensor 111A in the OFF period Toff indicates a voltage value Va in the portion other than that touched by the fingertip in accordance with the external light level, it indicates an extremely low voltage value Vc in the portion touched by the fingertip because the external light is shielded. Accordingly, it may be detected that a portion exhibiting a given difference or more in voltage as with the case between the voltage values Vb and Vc is the portion the fingertip 2 has come in contact with or closer to the screen by detecting the difference in the light receiving voltage between the ON period and the OFF period (by generating the difference image MC).

### (3-2. Composed Image Generation Processing)

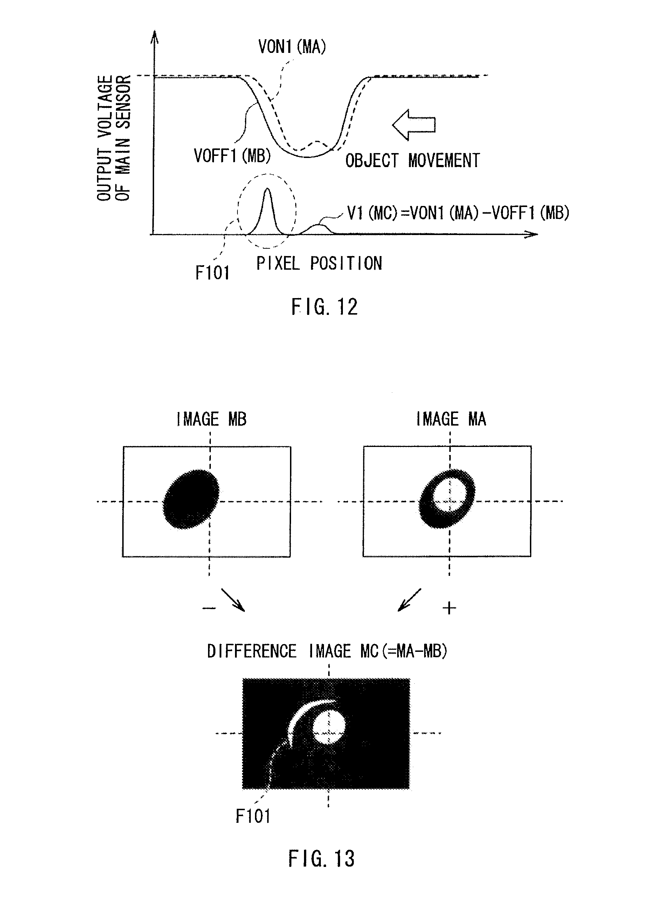

Subsequently, a composed image MS is generated based on the generated difference images MC and SC (Step S14). FIGs. 12 to 15 show an exemplary process for generating the composed image MS.

Here, because there is a given time lag between the ON period and the OFF period as shown in FIG. 12, when an object moves, misalignment appears between the light detection signal Von1 in the ON period (MA) and the light detection signal Voff1 in the OFF period (MB) in the portion corresponding to the object. For this reason, a false signal F101 is generated in another position different from the original signal corresponding to the position of the object in the difference image MC of these two images MA and MB and in its light detection signal V1 (equivalent to Von1 minus Voff1) (see FIGs. 12 and 13). Since such false signal F101 becomes a primary factor of the deterioration in detection accuracy when detecting the object position, it is preferable to remove it as much as possible.

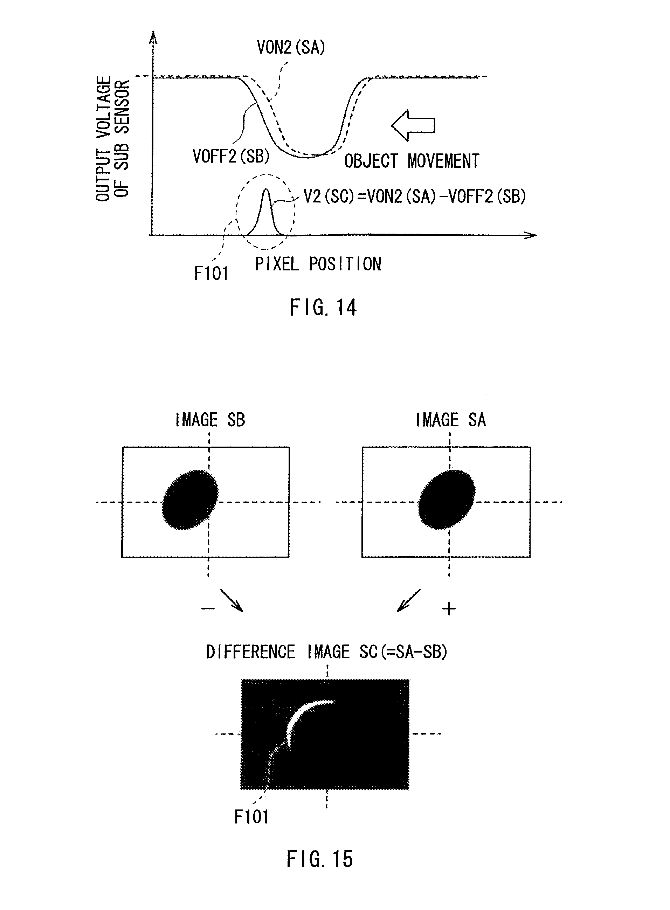

Accordingly, the image processing section 14 generates a composed image based on the difference image MC obtained by the main sensor 111A and the difference image SC obtained by the sub sensor 111B. Here, when the object is moving, the similar false signal F101 is also generated corresponding to the difference image SC as with the difference image MC as shown in FIGs. 14 and 15.

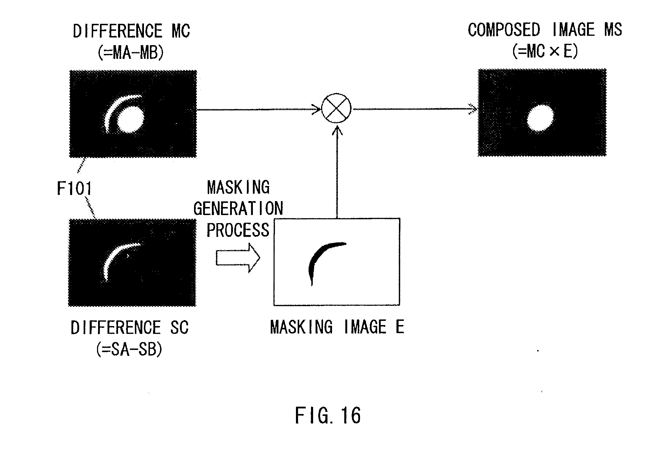

The light reception drive circuit 13 first generates a predetermined masking image E based on the difference image SC obtained by the sub sensor 111B and gets a logical product between the masking image E and the difference image MC to generate a composed image MS of these images as shown in FIG. 16. At this time, the light reception drive circuit 13 generates the masking image E by carrying out binarization process and image inversion process to the difference image SC for example. The binarization process may be executed by defining the light reception signals equivalent to or larger than a predetermined value (threshold) in the difference image SC as false signals, and converting the portion of the false signals into a masking image. Alternatively, besides the way of generating the composed image MS using the above-mentioned masking image E, the composed image MS may be obtained by obtaining a difference image between the difference image MC and the difference image SC (equivalent to MC minus SC), for example.

### (3-3. Positional Detection Process)

The image processing section 14 executes data processing for computing a center of gravity G and an area S of the object by using the composed image MS produced in this manner (step S15), and determines the position or the like of the object (step S16). In this case, for example, a field in the composed image MS having a value equal to or larger than a predetermined threshold level (to be described later) is binarized and noise is removed therefrom. Then, average values of the center coordinates (x, y) are computed to obtain barycentric coordinates G and an area S of the object. Thus information of the object is acquired in this manner using the composed image MS based on the difference image MC of the main sensor 111A and the difference image SC of the sub sensor 111B. As a result, even when the object is moving on the display panel 10 for example, generation of a false signal in the composed image MS is suppressed.

### (4. Setup Process)

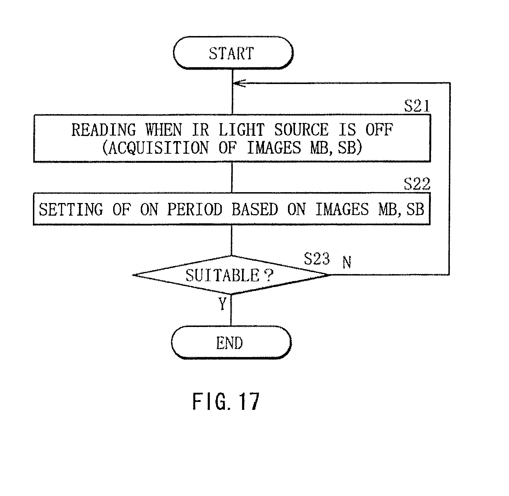

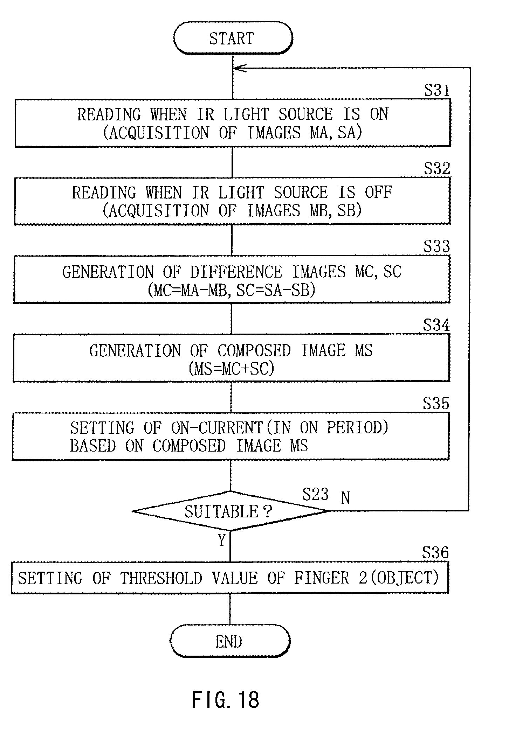

Subsequently, previous to the input operation of the above-mentioned position or the like of an object, a setup process is carried out to optimize the length of the ON period Ton and light intensity in accordance with the states of the object to be detected and level of the external light, etc. According to the present embodiment, the ON period Ton is variable within the range of a several hundred microseconds to a one-hundred-and-twentieth second (=1/60 second * 0.5) under a frame frequency of 60 Hz and a period of one-sixtieth second.
The light detection signal is image-processed after the AD conversion, and the input possible range of this AD conversion is called dynamic range. FIGs. 17 and 18 show an example of flow charts of the setup process.

First, when a fingertip or something has long pressed a surface plane of the display panel 10, the system changes from a power save state to an active state, and the display drive circuit 12 drives to switch between the ON period Ton and the OFF period Toff of the IR light source 151B per frame period.

### (4-1. Setup of the Length of the ON Period Ton)

For example, as shown in FIG. 17, the light detection signals Voff1 and Voff2 are read out by the main sensor 111A and the sub sensor 111B respectively in the OFF period Toff to obtain the images MB and SB (step S21). At this time, each reading operation by the main sensor 111A and the sub sensor 111B is performed after a light receiving time equal to that of the ON period Ton has passed. Then, the length of the ON period Ton is set up so that the light detection signals Voff1 and Voff2 acquired in this manner (MB and SB) may fall within, desirably, ten to ninety percent of the dynamic range (step S22). That is because a signal exceeding the dynamic range enters may cause saturation of AD output value and a fixed value starts to be outputted. As a result, it becomes difficult to detect change of a reflected light signal. Finally, it is confirmed that the set-up length of the ON period Ton falls within the above-mentioned range, and the setup process is completed.

### (4-2. Setup of the Light Intensity in the ON Period Ton)

Further, as shown in FIG. 18, the images MA and SA are acquired in the ON period Ton as with the above-mentioned steps S11 and S12 (FIG. 10) (step S31), and the images MB and SB are acquired in the OFF period Toff at first (step S32). Subsequently, after generating the difference images MC and SC as with the above-mentioned step S13, the composed image MS is generated as with the above-mentioned step S12.

Thus the light intensity (ON-state current) in the ON period is set up based on the composed image MS generated in this manner (step S35). Specifically, the light intensity (ON-state current) is optimized so that the maximum value of the reflected light signal in the composed image MS (except abnormal points) may fall within, desirably, five to ninety percent of the dynamic range. After confirming the maximum value of the reflected light signal in the set-up ON period Ton falls within the above-mentioned range, approximately half maximum value of the reflected light signal is set up as a binarization threshold of the object (step S36). When the setting here is directed to a fingertip, it is also possible to set up the threshold value of, for example, a stylus or the like, by multiplying a predetermined rate to the threshold value thus obtained as mentioned above. Then, the center of gravity G and the area S are computed in the above-mentioned positional detection process based on the threshold level of the object thus set-up as mentioned above.

If it is difficult to set the maximum value of a reflected light signal within the above-mentioned range due to too strong level of external light and so on, the IR light source 151B is kept OFF and current source of the main sensor 111A is shut off (measurement for reducing power consumption). In this case, only the sub sensor 111B executes detection of light, and the binarization threshold of an object is set in the center of the maximum value and the minimum value of an image (shadow image) by a signal (shadow signal) corresponding to the position of the object. In this case, a binarized image including values within the range of the set-up binarization threshold among the shadow images acquired by the sub sensor 111B is generated, and the center of gravity G and the area S are computed after the removal of noise such as an isolated point to acquire the information of the object such as the position thereof.

Since the reflected light signal is determined by the integral value of the light intensity in the ON period Ton and length of the ON period Ton, when external light has little effect, optimization of light intensity as described above is not always necessary and it may be sufficient to control at least one of the light intensity and length of the ON period Ton.

As mentioned above, according to the present embodiment, the image processing section 14 generates the difference images MC and SC from the images MA and SA in the ON period Ton and the images MB and SB in the OFF period Toff respectively, based on the outputs from the main sensor 111A and sub sensor 111B. Thus information of the object such as the position thereof is detected based on these difference images MC and SC. Namely, since the reflected light from the object and motion of the external light are detected from the difference image MC while the external light is detected from the difference image SC, it becomes possible to separate only the reflected light from the object by composing the difference images MC and SC, and position of the object and so on may be detected based on the separated data. Here, the display drive circuit 12 is driven so that the ON period Ton may be set shorter than the OFF period Toff, and reading operation in each period may be executed after a mutually-same light receiving time has passed. In this manner, compared with the case where the ON period Ton and the OFF period Toff driven by the time division driving are equal to each other, each light receiving time is reduced in the ON period Ton and the OFF period Toff.

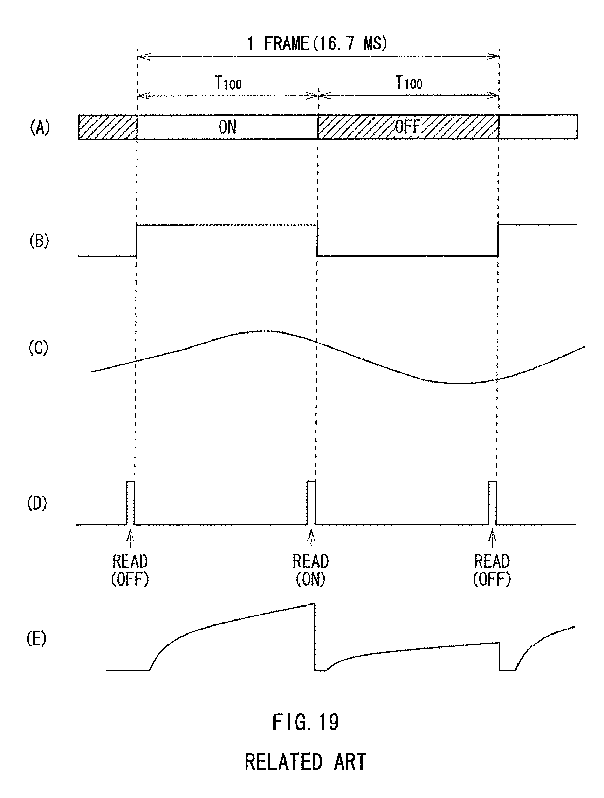

Here, FIG. 19A shows a timing chart according to a comparative example of the present embodiment, wherein an ON period (T₁₀₀) and an OFF period (T₁₀₀) of the IR light source 151B driven by the time division driving per unit frame period are equal to each other. In this case, the output of the IR light source 151B forms a rectangular wave as shown in FIG. 19B. Here in the comparative example, the reading of data from photosensors is performed at the end of each period, as shown in FIG. 19D.

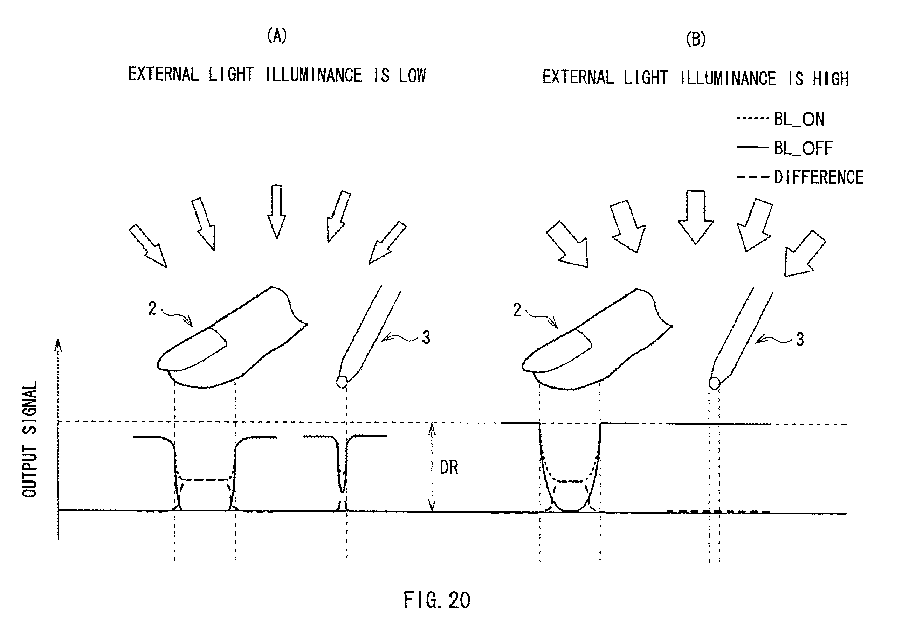

In this case, as shown in FIG. 20A, when the external light level is comparatively low, an external light signal falls within the dynamic range DR and a reflected light signal is detected with sufficient accuracy. Meanwhile, when the external light level is comparatively high as shown in FIG. 20B, the external light signal exceeds the dynamic range DR, and the main sensor 111A and the sub sensor 111B are saturated. As a result, detection of the reflected light signal becomes difficult. Moreover, if the object to be detected has a small detection face such as stylus 3, external light reaches the detection face to disturb detection of the reflected light signal. What is more, according to the time division driving of the comparative example, when the external light varies with time per unit frame period as shown in FIG. 19C, the output appears as shown in FIG. 19E, for example, and a false signal is more likely to occur. In addition, when the object is moving, the false signal is also likely to occur.

On the other hand, according to the present embodiment as described above, the light receiving time in each ON period Ton and OFF period Toff is reduced by controlling the ON period Ton in accordance with the external light level. Accordingly, compared with the above-mentioned comparative example, the main sensor 111A and the sub sensor 111B are less likely to be saturated even when the external light level is strong, and generation of a false signal is suppressed even when an object is moving or the external light level is not constant. Thus, information on the position, shape or size of a proximity object is available with accuracy irrespective of using condition.

Subsequently, modification (modification 1) of the display panel of the image I/O device 1 according to the above-mentioned embodiment will be hereinafter described. Hereinbelow, component elements similar to those in the above-mentioned embodiment are denoted by the same reference numerals so that overlapping description is suitably omitted.

### (Modification 1)

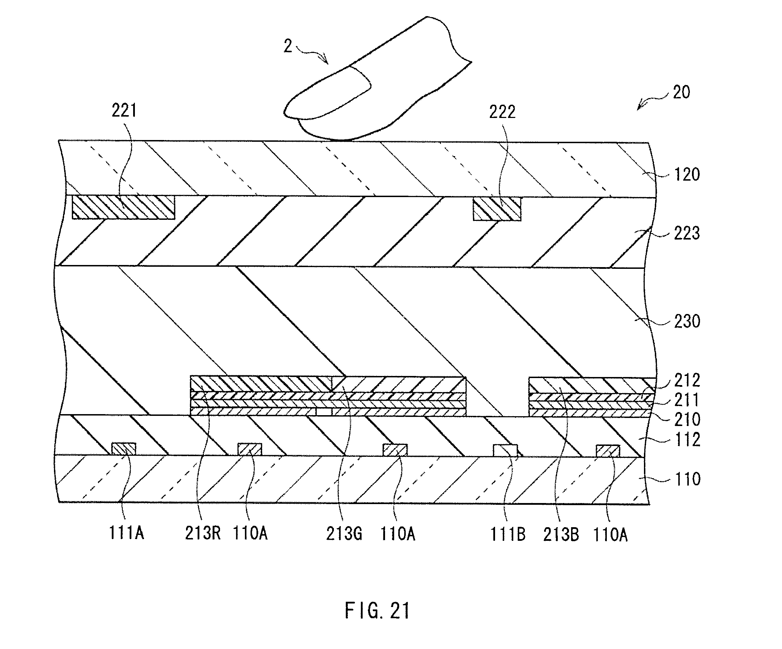

FIG. 21 shows a cross-section configuration of a display panel 20 according to Modification 1. The display panel 20 is an organic electroluminescence display in which organic EL devices are used as its display pixels. In the display panel 20, an organic EL device formed on a substrate 110 is enclosed by a substrate 120 with a sealing layer 230 in between. Here, it is to be noted that the back light 15 described in the above-mentioned embodiment is not needed according to the modification.

A pixel electrode 210 as an anode is formed on a flattening film 112 on the driving substrate 110 for each pixel, and an ultraviolet emission layer 211 is formed thereon as a layer common to each pixel electrode 210 for generating ultraviolet light. A common electrode 212 as a cathode is formed on the ultraviolet emission layer 211. On the common electrode 212, a red conversion layer 213R, a green conversion layer 213G and a blue conversion layer 213B are formed corresponding to the display pixels of R, G, and B.

A hole injection layer and a hole transporting layer may be disposed between the pixel electrode 210 and the ultraviolet emission layer 211 to be shared by each pixel. Alternatively, an electron injection layer and an electron transporting layer may be prepared between the common electrode 212 and the ultraviolet emission layer 211 to be shared by each pixel. Furthermore, the pixel electrode 210 may work as a cathode and the common electrode 212 may work as an anode.

The ultraviolet emission layer 211 is configured to include a luminescent material having fluorescence or phosphorescence. When electrical field is applied thereto, it recombines a part of positive holes injected from the pixel electrode 210 and a part of electrons injected from the common electrode 212, and generates a ultraviolet light. A triazole based dielectric (TAZ) etc., may be used as the component material of the ultraviolet emission layer 211, for example. In this case, it is desirable to combine with a wide-gap carrier transporting material such as BCP, B-phen, and Bu-PBD because that may avoid the reduction of luminous efficiency or prolonged light-emission wavelength due to the energy transmission to the hole injection layer, the hole transporting layer, the electron transporting layer and the electron injection layer (neither is illustrated), etc., adjoining the ultraviolet emission layer 211.

The red conversion layer 213R, the green conversion layer 213G and the blue conversion layer 213B are color conversion layers that convert a part of ultraviolet light generated from the ultraviolet emission layer 211 into a light of each color (energy conversion). These red conversion layers 213R, green conversion layer 213G and blue conversion layer 213B are configured to include a luminescent material having fluorescence or phosphorescence for example, and generates a light of each color through energy transmission from the ultraviolet emission layer 211 or reabsorption of light emitted from the ultraviolet emission layer 211. Material and thickness of these red conversion layers 213R, green conversion layer 213G and blue conversion layer 213B are suitably selected in view of such conditions as the ratio between each color light necessary for image display and the ultraviolet light for detection.

An ultraviolet transmission black 221 is disposed on the substrate 120, and the main sensor 111A is disposed in a portion lower than the ultraviolet transmission black 221. The ultraviolet transmission black 221 is a filter which shuts down a visible light and selectively transmits a ultraviolet light. In the present modification, the main sensor 111A has a photosensitivity in the near ultraviolet region for example. An ultraviolet shielding filter 222 is formed on the substrate 120, and the sub sensor 111B is disposed in a portion lower than the ultraviolet shielding filter 222. These ultraviolet transmission black 221 and the ultraviolet shielding filter 222 are flattened with a flattening film 223 on the substrate 120.

In such display panel 20, a line-sequential image display driving is performed by the display drive circuit 12 and the line-sequential light receiving driving is performed by the light reception drive circuit 13 as with the above-mentioned embodiment. However, in the present modification, the ON period of emission from the ultraviolet emission layer 211 is controlled to be shorter than the OFF period by the display drive circuit 12. In addition, reading operation by the main sensor 111A and the sub sensor 111B is performed in each ON period and OFF period after a mutually-same light receiving time has passed as with the above-mentioned embodiment. Other image process operations are performed similar to the above-mentioned first embodiment. However, in the case of organic electroluminescence display like the present modification, the ON period is determined based on the selected time of each gate line. In this regard, unlike the case of an liquid crystal display of the above-mentioned embodiment in which time division driving is applied to the whole surface of the back light 15, an extremely short ON period (several microsecond to one millisecond) is available. For this reason, the present modification has little problem of saturation of external light and generation of false signal caused by the time lag.

In the present modification, an ultraviolet light is generated from the ultraviolet emission layer 211 in the ON period, in which a given driving voltage is applied between the pixel electrode 210 and the common electrode 212. A part of the generated ultraviolet light is converted into the light of each color corresponding to the red conversion layer 213R, the green conversion layer 213G and the blue conversion layer 213B. As a result, image is displayed. Meanwhile, the remaining ultraviolet light, which is emitted from the ultraviolet emission layer 211 but not converted into colors, passes through the surface of the substrate 120 and emitted therefrom, and is reflected on the surface plane of the object coming close to the display panel 20. As with the above-mentioned embodiment, the composed image MS of the images each based on the reflected light and external light is produced in the image processing section 14, and the position of the object and so on is detected based on the composed image MS. Accordingly, an effect virtually equivalent to the above-mentioned embodiment is available.

### (Module and Application Example)

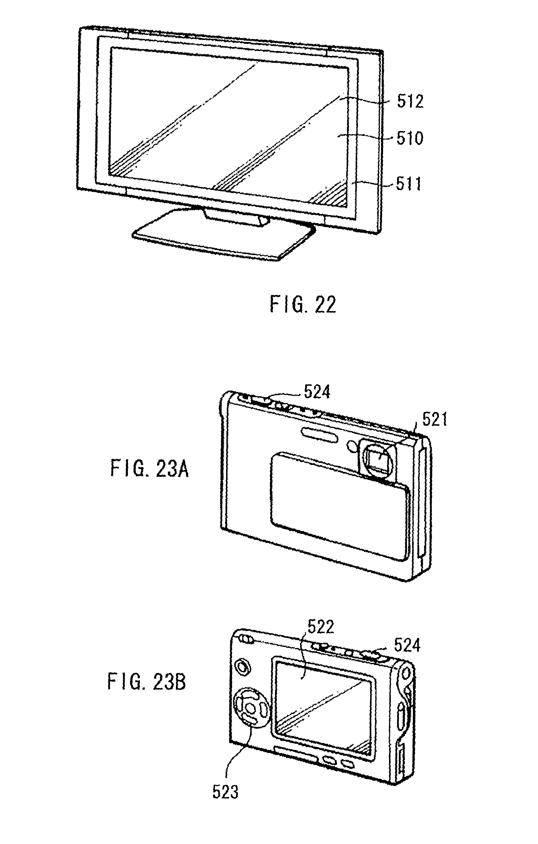

Subsequently, application example (application examples 1 to 5) of the image I/O device described in the above-mentioned embodiment and modification will be described hereinbelow with reference to FIGs. 22 to 26. The image I/O device of the above-mentioned embodiment etc., may be applied to any kind of electronic unit such as a TV apparatus, a digital camera, a laptop computer, a personal digital assistant device such as a mobile phone, and a video camera. In other words, the image I/O device of the above-mentioned embodiments may be applied to any kind of electronic unit that displays image signals inputted from outside or internally generated as an image or a video. Besides the following examples, application to something like a surveillance camera is also available for example in view of the feature of the present invention that the reflected component is exclusively taken out of detection light.

### (Application example 1)

FIG. 22 illustrates an external appearance of a TV apparatus according to the Application example 1. The TV apparatus includes an image display screen 510 having a front panel 511 and a filter glass 512, for example, and the image display screen 510 is constituted from the image I/O device according to the above-mentioned embodiment and so on.

### (Application example 2)

FIG. 23 illustrates an external appearance of a digital camera according to the Application example 2. The digital camera includes a flash light emitting portion 521, a display 522, a menu switch 523, and a shutter button 524 for example, and the display 522 is constituted from the image I/O device according to the above-mentioned embodiment and so on.

### (Application example 3)

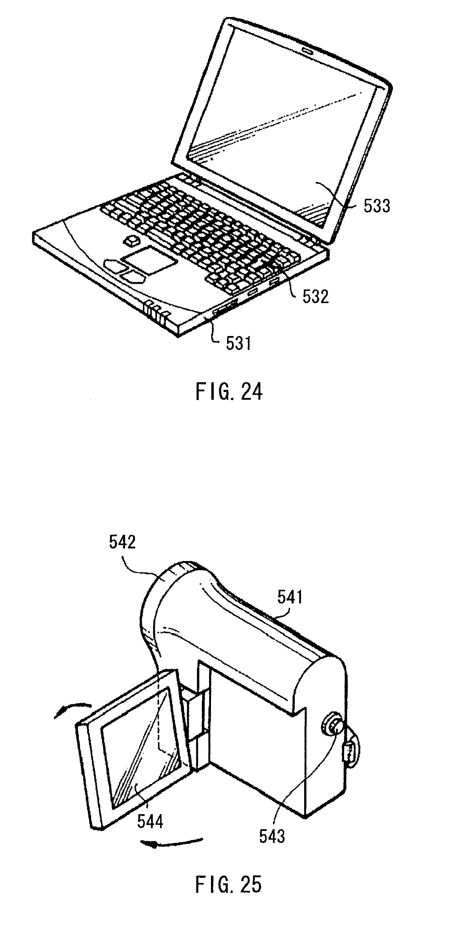

FIG. 24 illustrates an external appearance of a laptop computer according to the Application example 3. The laptop computer includes a body portion 531, a keyboard 532 for inputting characters etc., and a display 533 for displaying images for example, and the display 533 is constituted from the image I/O device according to the above-mentioned embodiment and so on.

### (Application example 4)

FIG. 25 illustrates an external appearance of a video camera according to the Application example 4. The video camera includes a body portion 541, a lens 542 disposed in the front side surface of the body portion 541 for capturing an image of an object, a start/stop switch 543 used at the time of image capturing, and a display 544, for example. The display 544 is constituted from the image I/O device according to the above-mentioned embodiment and so on.

### (Application example 5)

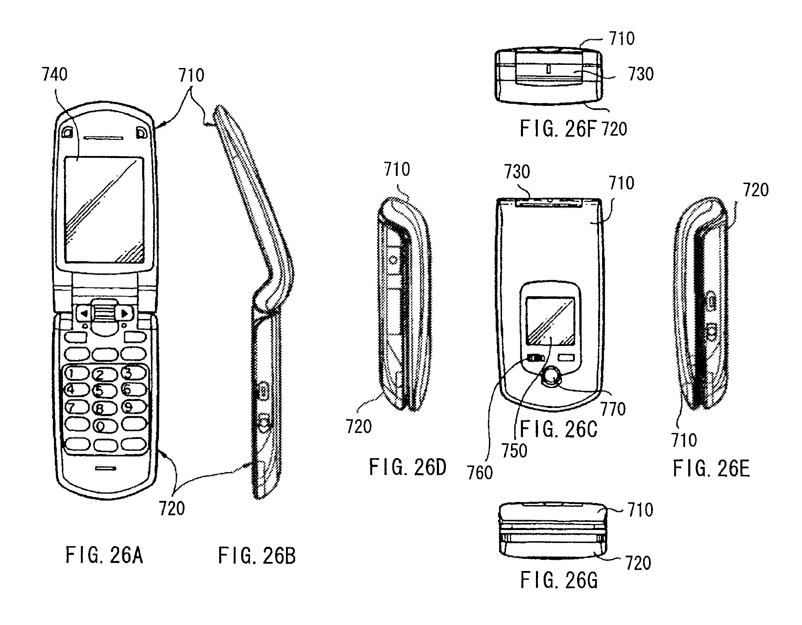

FIG. 26 illustrates an external appearance of a portable telephone according to the Application example 5. The portable telephone is constituted from an upper housing 710 and a lower housing 720 connected by a connecting mechanism (hinge) 730, including a display 740, a sub display 750, a picture light 760 and a camera 770, for example. The display 740 and the sub display 750 are constituted from the image I/O device according to the above-mentioned embodiment and so on.

As mentioned above, although the present invention has been explained with reference to some embodiments and modifications, the present invention is not limited to the above-mentioned embodiment and so on, and various kinds of modifications are available. For example, according to the above-mentioned embodiment, although explanation is given as for the case where the IR light source 151B is provided in the back light 15 to detect a reflection signal by using near infrared light, the light source for detection is not always limited to the IR light source. For example, a white light emitted from the back light as a light for display may be used as a light for detection. In this case, for example, the display drive circuit 12 drives the white light source 151A in the back light 15 to be alternately switched-ON and switched-OFF in accordance with the frame period of the display panel 10.

Specifically, the display drive circuit 12 controls the drive of the white light source 151A so that the ON period of the white light source 151A may be shorter than the OFF period thereof per unit frame period and supplies a display signal to each display pixel in the ON period, thereby displaying an image. In addition, even in this case, the light reception drive circuit 13 drives the main sensor 111A and the sub sensor 111B so that each reading operation may be performed in the ON period and the OFF period after a mutually-same light receiving time has passed. However, when a display light is used also as a detection light, the output of the reflection signal may depend on the output of display, or detection may be difficult in the case of black display. Accordingly, additional system for removing noise caused by a display image is needed. Alternatively, the white light source 151A may be constituted from the three primary colors (R, G, B) of LEDs, and at least one of them may be alternately switched-ON and switched-OFF.

Furthermore, according to the above-mentioned embodiment, although the case where the polarizing plate 123 on the display side of the display panel 10 is exposed and an object such as a finger comes in contact with the surface of the polarizing plate 123 is mentioned as an example, the polarizing plate may be further covered with another member such as a protective plate or the like, for example. Moreover, since optical positional detection like in the present invention is performed by detecting the light reflected from the surface of an object, the positional detection of an object is available even when the object is not in contact with a display screen or a module surface unlike the case of a resistance-based positional detecting method and so on. Namely, the positional detection of an object is available not only when the object is in contact with the module surface but when it comes close thereto as with the contacting case.

In addition, according to the above-mentioned embodiment and so on, although a liquid crystal display with LC elements and an organic EL display with organic EL devices are mentioned as an example of the image I/O device, the present invention is applicable also to other display units such as e-paper with electrophoresis and so on, for example.

The present application contains subject matter related to that disclosed in Japanese Priority Patent Application JP2009-046019 filed in the Japan Patent Office on February 27, 2009, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An image input device comprising:
a light source;
a light source driving section controlling alternative on-off driving of the light source in such a manner that ON period is shorter than OFF period;
a first photo-detection element having a photosensitive wavelength range covering a wavelength range of light emitted from the light source;
a photo-detection-element driving section driving the first photo-detection element so that read operations are performed after respective photoreception periods which are same in length both in the ON period and in the OFF period; and
an image processing section acquiring object information on position, shape and size of an object based on output signals from the first photo-detection element, wherein
the image processing section generates a first difference image as a difference between an ON image and an OFF image, the ON image and the OFF image being acquired based on respective output signals from the first photo-detection element in the ON period and the OFF period, and then
the image processing section acquires the object information through data processing based on the first difference image.

2. The image input device according to claim 1, wherein
the light source driving section controls length of the photoreception periods so that the maximum value of the output signal read from the first photo-detection element in the OFF period falls within a dynamic range of the first photo-detection element.

3. The image input device according to claim 1 or 2, wherein
the light source driving section determines, based on the first difference image, a signal component due to reflected light from the object, the signal component being included in the output signal from the first photo-detection element in the ON period, and
the light source driving section controls length of the photoreception periods or intensity of light from the light source or both thereof so that the maximum value of the signal component due to the reflected light from the object falls within the dynamic range of the first photo-detection element.

4. The image input device according to any of claims 1 to 3, further comprising a second photo-detection element having photosensitivity lower than that of the first photo-detection element in a wavelength range of the light source and higher than that in a wavelength range other than that of the light source, wherein
the photo-detection-element driving section further drives the second photo-detection element so that read operations are performed after the respective photoreception periods which are same in length both in the ON period and in the OFF period, and
the image processing section further generates a second difference image as a difference between an ON image and an OFF image, the ON image and the OFF image being acquired based on respective output signals from the second photo-detection element in the ON period and the OFF period, and then
the image processing section acquires the object information through data processing based on a composite image of the first difference image and the second difference image.

5. The image input device according to claim 4, wherein
the first photo-detection element and the second photo-detection element are arranged alternately in a ratio of one to one.

6. The image input device according to claim 4 or 5, wherein
the first photo-detection element has photosensitivity in a wavelength range of invisible light, and the second photo-detection element has photosensitivity in a wavelength range of visible light.

7. The image input device according to any of claims 1 to 6, wherein the light source emits invisible light.

8. An image input-output device, comprising:
a display panel;
a display-panel driving section controlling on-off driving of the display panel in such a manner that ON period in which light is emitted from the display panel is shorter than OFF period in which light is not emitted from the display panel;
a first photo-detection element having a photosensitive wavelength range covering a wavelength range of light emitted from the display panel;
a photo-detection-element driving section driving the first photo-detection element so that read operations are performed after respective photoreception periods which are same in length both in the ON period and in the OFF period; and
an image processing section acquiring object information on position, shape and size of an object based on output signals from the first photo-detection element, wherein
the image processing section generates a first difference image as a difference between an ON image and an OFF image, the ON image and the OFF image being acquired based on respective output signals from the first photo-detection element in the ON period and the OFF period, and then
the image processing section acquires the object information through data processing based on the first difference image

9. The image input-output device according to claim 8, wherein the display panel has liquid crystal display elements.

10. The image input-output device according to claim 8, wherein the display panel has organic EL elements.

11. The image input-output device according to any of claims 8 to 10,
wherein
the display panel emits both visible light and invisible light, and
the first photo-detection element has photosensitivity in a wavelength range of invisible light.

12. An electronic unit comprising:
a light source;
a light source driving section controlling alternative on-off driving of the light source in such a manner that ON period is shorter than OFF period;
a first photo-detection element having a photosensitive wavelength range covering a wavelength range of light emitted from the light source;
a photo-detection-element driving section driving the first photo-detection element so that read operations are performed after respective photoreception periods which are same in length both in the ON period and in the OFF period; and
an image processing section acquiring object information on position, shape and size of an object based on output signals from the first photo-detection element, wherein
the image processing section generates a first difference image as a difference between an ON image and an OFF image, the ON image and the OFF image being acquired based on respective output signals from the first photo-detection element in the ON period and the OFF period, and then
the image processing section acquires the object information through data processing based on the first difference image.
